# NEUE EUROPÄISCHE PATENTSCHRIFT

(11) **EP 2 855 868 B2**
(45) Veröffentlichungstag und Bekanntmachung des Hinweises auf die Entscheidung über den Einspruch: **18.12.2019**
(45) Hinweis auf die Patenterteilung: 13.07.2016
(21) Anmeldenummer: 13722680.9
(22) Anmeldetag: 08.05.2013
(51) Int. Cl.: F01N 3/20, F01N 13/14

(54) **REDUKTIONSMITTELZUGABE- UND AUFBEREITUNGSSYSTEM EINES KRAFTFAHRZEUGS**
REDUCING AGENT ADDITION AND PREPARING SYSTEM FOR A MOTOR VEHICLE
SYSTÈME D'ADDITION ET DE PRÉPARATION D'AGENT DE RÉDUCTION POUR VÉHICULE AUTOMOBILE

(30) Priorität: 01.06.2012 DE 102012010878
(43) Veröffentlichungstag der Anmeldung: 08.04.2015
(73) Patentinhaber: Daimler AG, 70372 Stuttgart (DE)
(72) Erfinder: PETRY, Andreas, 71563 Affalterbach (DE)
(74) Vertreter: Hofstetter, Schurack & Partner
(86) Internationale Anmeldenummer: PCT/EP2013/001372
(87) Internationale Veröffentlichungsnummer: WO 2013/178321

(56) Entgegenhaltungen:
- WO-A1-2009/012859
- WO-A1-2009/012885
- WO-A1-2012/044233
- WO-A1-2012/047159
- DE-A1- 4 203 807
- US-A1- 2003 079 467
- US-A1- 2006 218 902
- US-A1- 2008 307 780
- US-A1- 2010 319 329
- US-A1- 2011 094 206

## Beschreibung

Die Erfindung betrifft ein Reduktionsmittelzugabe- und Aufbereitungssystem eines Kraftfahrzeugs, zur Zugabe eines flüssigen Reduktionsmittels in von einer Brennkraftmaschine des Kraftfahrzeugs abgegebenes Abgas und zur Aufbereitung des zugegebenen Reduktionsmittels im Abgas.

Ein Reduktionsmittelzugabe- und Aufbereitungssystem für ein Kraftfahrzeug nach dem Oberbegriff des Anspruchs 1 ist aus der Druckschrift WO 2009/012885 A1 bekannt.

Zur Abgasnachbehandlung werden oftmals im Ausgangszustand flüssige Reduktionsmittel wie Mineralölkraftstoff oder wässrige Harnstofflösung ins Abgas von Brennkraftmaschinen eingebracht. Dabei besteht ein Problem in Bezug auf die Aufbereitung des in flüssigem Zustand eingebrachten Reduktionsmittels im Hinblick auf eine anzustrebende gleichmäßige Verteilung und im Hinblick auf eine Verdampfung. Bei wässriger Harnstofflösung besteht zusätzlich noch das Problem, durch Hydrolyse und/oder Thermolyse den zur selektiven katalytischen Stickoxid-Reduktion benötigten Ammoniak aus dem Harnstoff freizusetzen. Zur Lösung des Problems sind bereits eine Vielzahl von Abgassystemvarianten mit Aufbereitungsstrecken, Mischern, Verdampfern und Hydrolysekatalysatoren vorgeschlagen worden. Trotz der zahlreichen Lösungsvorschläge besteht weiterhin Verbesserungsbedarf in Bezug auf die Aufbereitung von insbesondere in flüssigem Zustand ins Abgas eingebrachten Reduktionsmitteln in dem vorstehend genannten Sinn. Aufgabe der Erfindung ist es daher, eine Vorrichtung anzugeben, mit welcher vorteilhafte Einbringung von Reduktionsmittel und eine möglichst gute Aufbereitung von in Abgas einer Brennkraftmaschine eingebrachtem Reduktionsmittel ermöglicht ist.

Diese Aufgabe wird durch ein Reduktionsmittelzugabe- und Aufbereitungssystem mit den Merkmalen des Anspruchs 1 gelöst.

Das erfindungsgemäße Reduktionsmittelzugabe- und Aufbereitungssystem zur Zugabe eines flüssigen Reduktionsmittels in von einer Brennkraftmaschine des Kraftfahrzeugs abgegebenes Abgas und zur Aufbereitung des zugegebenen Reduktionsmittels im Abgas umfasst einen einer Reduktionsmittel-Dosiereinheit zugeordneten Injektor, der einen Reduktionsmittelsprühstrahl in das Abgas sprühen kann, ein in einem Abgastrakt der Brennkraftmaschine angeordnetes Mischrohr mit einem ersten und einem zweiten axialen Mischrohrende, und ein im Bereich des ersten Mischrohrendes an oder in dem Mischrohr angeordnetes, sich in Richtung vom ersten Mischrohrende zum zweiten Mischrohrende mit einem vorgegebenen Aufweitungswinkel kegelförmig aufweitendes Trichterelement. Dabei sind das Mischrohr und das Trichterelement als Rotations-Hohlkörper mit einer jeweils perforierten Mantelfläche ausgebildet, wobei die Perforation des Mischrohrs zumindest überwiegend großflächiger als die Perforation des Trichterelements ausgeführt ist. Das Trichterelement weist an seinem dem ersten Mischrohrende zugeordneten Ende eine Durchtrittsöffnung auf und die Reduktionsmittel-Dosiereinheit ist so angeordnet, dass der Injektor den Reduktionsmittel-Sprühstrahl durch die Durchtrittsöffnung ins Innere des Trichterelements sprühen kann.

Der vom Injektor in das Trichterelement eingesprühte Sprühstrahl kann sich infolge einer durch die Perforation des Trichterelements ermöglichten Abgaseinströmung mit vergleichsweise hoher Geschwindigkeit ins Innere des Trichterelements dort optimal und unter Vermeidung einer Wandbenetzung in einen feinen Sprühnebel entwickeln. Dabei ist ein Weitertransport in Richtung des zweiten Mischrohrendes ermöglicht, wobei infolge der größeren Perforation des Mischrohres und der dadurch bedingten Abgaseinströmung mit vergleichsweise niedriger Geschwindigkeit in das Mischrohrinnere ebenfalls eine Wandbenetzung zumindest weitgehend vermieden ist. Somit ist eine Aufbereitungsstrecke geschaffen, bei welcher eine Ausbildung eines feinen Sprays aus Reduktionsmitteltröpfchen ermöglicht ist, welche auf ihrem Transportweg in vorteilhafter Weise zunehmend leichter verdampfen können. Beim Austritt aus dem zweiten Mischrohrende ist das Reduktionsmittel daher typischerweise zumindest überwiegend verdampft und eine homogene Verteilung über den gesamten Abgasleitungsquerschnitt ist ermöglicht.

In Ausgestaltung der Erfindung fallen die Rotationsachsen von Mischrohr und Trichterelement wenigstens annähernd aufeinander und die Durchtrittsöffnung ist wenigstens annähernd rotationsachsenzentral angeordnet. Infolge dieser axial fluchtenden rotationssymmetrischen Anordnung ist ein zentriertes Einsprühen des Reduktionsmittels in das Trichterelement ermöglicht, was die Vermeidung einer Wandbenetzung unterstützt.

Erfindungsgemäß weist der Injektor eine endseitige Injektorspitze auf, wobei die Injektorspitze und die Durchtrittsöffnung des Trichterelements jeweils eine wenigstens annähernd kreisförmige Umfangskontur aufweisen und an der Injektorspitze wenigstens annähernd mittig eine Austrittsöffnung für das Reduktionsmittel angeordnet ist und die Austrittsöffnung und ein Mittelpunkt der Durchtrittsöffnung wenigstens annähernd auf der Rotationsachse des Trichterelements liegen und die Injektorspitze mit geringem Abstand zur Durchtrittsöffnung dem Trichterelements derart gegenüber liegend angeordnet ist, dass durch die Injektorspitze und einem die Durchtrittsöffnung umgebenden Mantelflächenbereich des Trichterelements ein Ringspalt ausgebildet ist, durch welches Abgas ins Innere des Trichterelements einströmen kann. Infolge der Ausbildung des Ringspalts kann durch diesen ins Innere des Trichterelements eintretendes Abgas den vom Injektor abgegebenen Sprühstrahl von hinten erfassen und weitestgehend wirbel- und rückströmungsfrei in axialer Richtung transportieren. Weiterhin sind aufgrund dieser Ausführungsform eine Ausbildung von strömungsmäßigen Totzonen, Wandbenetzungen und daraus resultierende Ablagerungen vermeidbar. Dabei ist es besonders vorteilhaft, wenn in weiterer Ausgestaltung der Erfindung der Ringspalt so dimensioniert ist, dass das durch den Ringspalt in das Trichterelement einströmende Abgas zumindest in oberhalb einer Teillast liegenden Betriebspunkten der Brennkraftmaschine eine Eintrittsgeschwindigkeit aufweist, welche oberhalb einer Geschwindigkeit liegt, mit welcher der Injektor den Reduktionsmittelsprühstrahl absprüht. Dadurch ist eine besonders wirksame Ausbildung eines feinen Sprays durch zerkleinernde Aufteilung von Reduktionsmitteltröpfchen ermöglicht und das Verdampfungsverhalten ist verbessert.

Weiterhin hat es sich als besonders vorteilhaft erwiesen, wenn in weiterer Ausgestaltung der Erfindung der Injektor einen sich wenigstens annähernd kegelförmig aufweitenden Reduktionsmittelsprühstrahl in das Abgas sprühen kann, wobei ein Aufweitungswinkel des Reduktionsmittelsprühstrahls wenigstens annähernd dem Aufweitungswinkel des Trichterelements entspricht. Dies ermöglicht eine gleichmäßige verkleinernde Zerteilung der Reduktionsmitteltröpfchen unter Vermeidung einer Benetzung der inneren Mantelfläche des Trichterelements und eine Ausbildung von gleichmäßigen ungestörten Strömungsverhältnissen.

In weiterer Ausgestaltung der Erfindung liegt der Aufweitungswinkel des Trichterelements im Bereich zwischen 20 Grad und 70 Grad, insbesondere zwischen 30 Grad und 60 Grad. Diese Ausgestaltung hat sich als besonders strömungsgünstig und vorteilhaft für die Reduktonsmittelaufbereitung erwiesen.

In weiterer Ausgestaltung der Erfindung ist vorgesehen, dass durch die Perforation des Trichterelements in das Trichterelement einströmendes Abgas eine wenigstens annähernd senkrechte Orientierung in Bezug eine Hüllfläche des Reduktionsmittelsprühstrahlkegels des vom Injektor abgesprühten Reduktionsmittelsprühstrahls aufweist. Dadurch ist die Ausbildung eines die Innenwand des Trichterelements abschirmenden Abgaspolsters ermöglicht, wodurch eine Gefahr von Wandbenetzung weiter vermindert ist und eine Zerkleinerung der Reduktionsmitteltröpfchen gefördert wird.

In weiterer Ausgestaltung der Erfindung ist das Trichterelement zumindest großteils im Mischrohrinneren angeordnet, wobei das Trichterelement an seinem aufgeweiteten Ende ringsum innen an der Mantelfläche des Mischrohrs anliegt oder stoff- und/oder formschlüssig mit dem Mischrohr verbunden ist. Somit ist eine stabile Anordnung von Mischrohr und Trichterelement zueinander sichergestellt, die besonders kompakt ist.

In weiterer Ausgestaltung der Erfindung ist ein Abgasleitelement vorgesehen, welches einen Teil von in Richtung des ersten Mischrohrendes strömenden Abgases auf die perforierte Mantelfläche des Trichterelements lenkt und einen zweiten Teil in Richtung auf einen in Bezug auf das Trichterelement (10) stromabwärtigen Teil der perforierten Mantelfläche des Mischrohres (7) lenkt. Dies ermöglicht gleichmäßige und von der Strömungsgeschwindigkeit weitgehend unabhängige Strömungsverhältnisse. Dabei wirkt der in die Richtung der perforierten Mantelfläche des Trichterelements gelenkte und zumindest teilweise ins Innere des Trichterelements strömende Abgasanteil fördernd für die Ausbildung eines feinen Reduktionsmittelsprays. Der in Richtung der Mantelfläche des Mischrohrs gelenkte und zumindest teilweise ins Innere des Mischrohrs strömende Abgasteil bewirkt einen Weitertransport des Reduktionsmittels.

In weiterer Ausgestaltung der Erfindung ist zur Abgasführung ein knieförmig abgebogenes Abgasleitungselement mit einem einströmseitigen ersten Schenkel und einem sich an den ersten Schenkel anschließenden abströmseitigen zweiten Schenkel vorgesehen, wobei sich das Mischrohr von einem Umlenkungsbereich vom ersten Schenkel zum zweiten Schenkel in den zweiten Schenkel hinein erstreckt und konzentrisch zum zweiten Schenkel angeordnet ist. Dies ermöglicht eine besonders günstige und kompakte Anordnung des gesamten Reduktionsmittelzugabe- und Aufbereitungssystems. Zur Vereinfachung des Anschlusses an den Abgastrakt ist es dabei in vorteilhafter Weise weiterhin vorgesehen, dass an einem einströmseitigen Ende des ersten Schenkels eine erste Trennstelle zum Ansetzen eines Abgaszufuhrrohres und am ausströmseitigen Ende des zweiten Schenkels eine zweite Trennstelle zum Anschluss eines Abgasabfuhrrohres vorgesehen sind. Dabei ist gemäß einer weiteren vorteilhaften Ausgestaltung der Erfindung vorgesehen, dass sich das Mischrohr bis über die zweite Trennstelle aus dem knieförmig gebogenen Abgasleitungselement hinaus erstreckt. Auf diese Weise ist ein strömungsmäßig nachteiliger Einfluss der Trennstelle auf die Reduktionsmittelaufbereitung vermeidbar, da das Mischrohr die Trennstelle abschirmt.

In weiterer Ausgestaltung der Erfindung ist für das Abgaszufuhrrohr ein Wirbel bildendes Blendenbauteil vorgesehen. Dadurch ist eine Verbesserung einer Gleichverteilung der Abgasströmung in Bezug auf den Querschnitt des Abgaszufuhrrohrs ermöglicht.

Als besonders vorteilhaft hat es sich erwiesen, wenn in weiterer Ausgestaltung der Erfindung das knieförmig abgebogene Abgasleitungselement außenseitig wenigstens abschnittsweise eine Wärmeisolationsummantelung aufweist. Dadurch werden eine Verdampfung des Reduktionsmittels behindernde Wärmeverluste in dem für die Reduktionsmittelaufbereitung kritischen Bereich des Abgastrakts weitgehend vermieden oder zumindest verringert.

In weiterer Ausgestaltung der Erfindung ist ein Flanschbauteil vorgesehen, an dem das Mischrohr und die Reduktionsmittel-Dosiereinheit befestigt sind und an dem ferner außenseitig in Bezug auf den Abgastrakt wenigstens ein Kühlblech zur Wärmeabfuhr vom Flanschbauteil an die Umgebung befestigt ist. Infolge dieser Ausführung ist eine Verminderung der Temperaturbelastung der Dosiereinheit insgesamt und insbesondere des Injektors ermöglicht. Dabei ist es besonders vorteilhaft, wenn ein erstes und ein zweites Kühlblech vorgesehen sind, wobei das erste und das zweite Kühlblech über ein Wärmeübertragungsblech in Wärmeübergangskontakt miteinander stehen und durch das Wärmeübertragungsblech auf Abstand zueinander gehalten sind. Dies ermöglicht eine weitere Verbesserung der Wärmeabfuhr, wobei mittels des Wärmeübertragungsbleches zudem eine gezielte Formung des sich ausbildenden Temperaturgradienten ermöglicht ist und somit hohe Temperaturen gezielt von diesbezüglich kritischen Stellen ferngehalten werden können.

Weitere Vorteile, Merkmale und Einzelheiten der Erfindung ergeben sich aus der nachfolgenden Beschreibung bevorzugter Ausführungsbeispiele sowie anhand der Zeichnungen. Die vorstehend in der Beschreibung genannten Merkmale und Merkmalskombinationen sowie die nachfolgend in den Figurenbeschreibungen genannten und/oder in den Figuren alleine gezeigten Merkmale und Merkmalskombinationen sind nicht nur in der jeweils angegeben Kombination sondern auch in anderen Kombinationen oder in der Alleinstellung verwendbar, ohne den Rahmen der Erfindung zu verlassen. Die Figuren zeigen in:
- Fig. 1: eine Schnitt-Darstellung einer bevorzugten Ausführungsform des erfindungsgemäßen Reduktionsmittelzugabe- und Aufbereitungssystems,
- Fig. 2: einen Ausschnitt des Reduktionsmittelzugabe- und Aufbereitungssystems nach Fig. 1 und
- Fig. 3: eine perspektivische Darstellung einer Kühlblechanordnung zur Kühlung der Dosiereinheit.

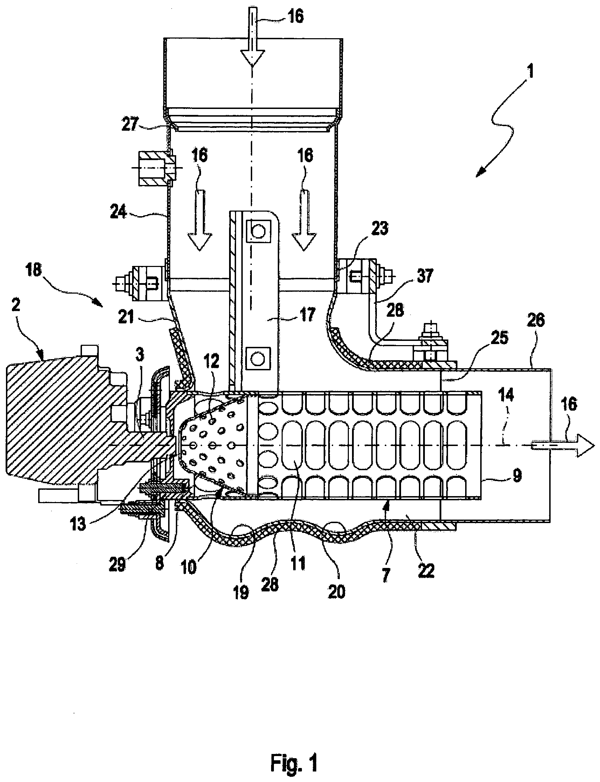

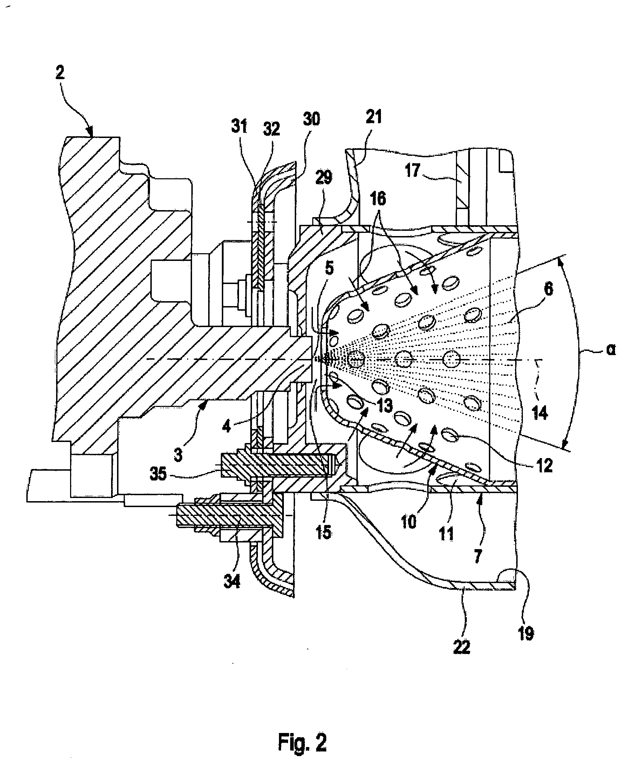

Nachfolgend werden unter Bezug auf die Figuren 1 und 2 eine vorteilhafte und bevorzugte Ausführungsform des erfindungsgemäßen Reduktionsmittelzugabe- und Aufbereitungssystems und deren Eigenschaften und Funktionen näher beschrieben, wobei gleichen Bauteilen dieselben Bezugszeichen zugeordnet sind. Dabei ist in Fig. 1 eine Schnitt-Darstellung des Reduktionsmittelzugabe- und Aufbereitungssystems 1 dargestellt, wahrend Fig. 2 in perspektivischer Ansicht einen Ausschnitt zeigt, der speziell die Verhältnisse an einem Injektor 3 des Reduktionsmittelzugabe- und Aufbereitungssystems 1 zeigt. Das in den Figuren 1 und 2 dargestellte Reduktionsmittelzugabe- und Aufbereitungssystems 1 dient vorliegend der Einbringung, Verteilung und Verdampfung von wässriger Harnstofflösung in einen Abgastrakt einer Kraftfahrzeug-Brennkraftmaschine, insbesondere eines Dieselmotors eines Nutzfahrzeugs. Das Reduktionsmittelzugabe- und Aufbereitungssystem 1 wird jedoch auch als geeignet zur Einbringung und Aufbereitung von anderen flüssigen Reduktionsmitteln, wie beispielsweise Mineralölkraftstoff, insbesondere Dieselkraftstoff, angesehen.

Entsprechend der Darstellung in Fig. 1 weist das Reduktionsmittelzugabe- und Aufbereitungssystem 1 ein knieförmig abgebogenes Abgasleitungselement 18 auf, mit dessen abgaseintrittseitigem erstem Schenkel 21 an einer ersten Trennstelle 23 ein Abgaszufuhrrohr 24 verbunden ist. Mit einem abgasaustrittseitigen zweiten Schenkel 22 ist an einer zweiten Trennstelle 25 ein Abgasabfuhrrohr 26 verbunden. Bevorzugt ist das Abgasleitungselement 18 aus zwei Halbschalen aufgebaut, was die Montage erleichtert.

Von einem nicht dargestellten Dieselmotor erhält das Reduktionsmittelzugabe- und Aufbereitungssystem 1 Stickoxide enthaltendes Abgas, in welche die Harnstofflösung eingespritzt wird. Mit Harnstofflösung angereichertes Abgas verlässt das Reduktionsmittelzugabe- und Aufbereitungssystem 1 durch Austritt aus dem Abgasabfuhrrohr 26 und wird einem nachgeschalteten SCR-Katalysator zur selektiven katalytischen Stickoxid-reduktion mit aus dem Harnstoff durch Thermolyse und/oder Hydrolyse freigesetzten Ammoniak zugeführt, was ebenfalls nicht näher dargestellt ist. Eine Abgasströmungshauptrichtung ist dabei durch Pfeile 16 gekennzeichnet. Dabei erfolgt durch das Reduktionsmittelzugabe- und Aufbereitungssystem 1 auf besonders vorteilhafte Weise eine Zugabe, Verteilung und Verdampfung der Harnstofflösung was nachfolgend unter pauschalem Bezug auf eine Aufbereitung näher erläutert wird. Es versteht sich, dass das Abgasreinigungssystem des Dieselmotors außer dem SCR-Katalysator weitere katalytisch und/oder filterwirksame Abgasreinigungselemente vorgeschaltet und/oder nachgeschaltet aufweisen kann.

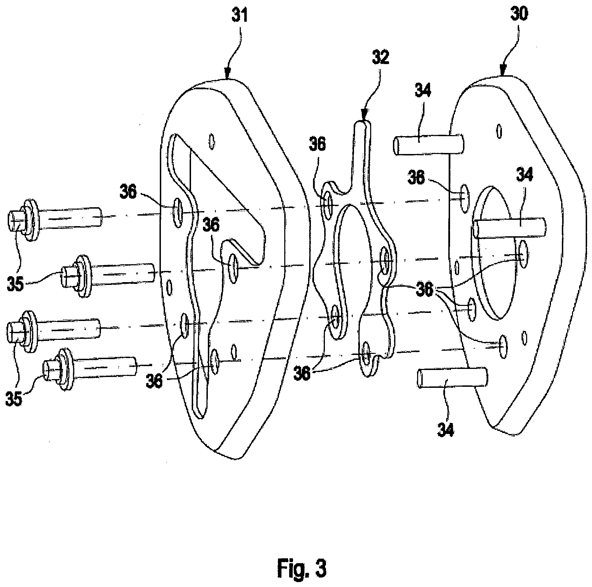

Zur dosierten Zugabe der Harnstofflösung zum Abgas ist vorliegend eine Dosiereinheit 2 mit einem Injektor 3 vorgesehen, wobei der Injektor 3 einen kegelförmigen Sprühstrahl 6 der Harnstofflösung abgeben kann, was speziell in Fig. 2 verdeutlicht ist. Zur Aufbereitung ist einerseits ein als Hohlzylinder mit kreisförmigem Querschnitt ausgebildetes Mischrohr 7 vorgesehen, dessen Mantelfläche mit einer großflächigen Perforation 11 versehen ist. Das Mischrohr 7 erstreckt sich von einem nahe des Injektors 3 im Übergangsbereich vom ersten Schenkel 21 zum zweiten Schenkel 22 angeordneten ersten Ende 8 über die zweite Trennstelle 25 hinaus bis zu seinem zweiten Ende 9. Dabei verläuft es bezüglich einer Achse 14 konzentrisch und mit vergleichsweise geringem radialen Abstand zum zweiten Schenkel 22 des gebogenen Abgasleitungselements 18. Getragen wird das Mischrohr 7 durch ein Flanschbauteil 29, an welchem auch die Dosiereinheit 2 befestigt ist. Die Befestigung der Dosiereinheit 2 am Flanschbauteil 29 wird weiter unten unter zusätzlichem Bezug auf Fig. 3 näher erläutert.

Ein für die Aufbereitung der Harnstofflösung weiterhin maßgebliches Bauteil ist ein im Bereich des ersten Mischrohrendes 8 im Mischrohrinneren angeordnetes Trichterelement 10, welches ebenfalls eine perforierte Mantelfläche aufweist. Das Trichterelement 10 ist als Rotationskörper ausgebildet und vorzugsweise so angeordnet, dass es mit dem Mischrohr 7 die Rotationsachse 14 gemein hat. Das Trichterelement 10 ist vorliegend an seinem aufgeweiteten Ende ringsum mit dem Mischrohr 7, etwa durch Verschweißen, fest verbunden. Dadurch wird das Mischrohr 7 in einen stromaufwärtigen und dem Injektor 3 bzw. der Dosiereinheit 2 zugewandten Teil und in einen stromabwärtigen Teil mit einem völlig freien Ausströmquerschnitt aufgeteilt. An seinem verjüngten, dem Injektor 3 mit geringem Abstand gegenüberliegenden Ende weist das Trichterelement 10 eine Durchtrittsöffnung 13 auf, durch welche der Injektor 3 den Sprühstrahl 6 ins Innere des Trichterelements 10 sprühen kann. Der Injektor 3 ist hierzu vorteilhafterweise fluchtend mit der Achse 14 ausgerichtet, wobei seine an der Injektorspitze 4 angeordnete Austrittsöffnung 5 auf der Achse 14 und somit mittig in Bezug auf die Durchtrittsöffnung 13 des Trichterelements 10 angeordnet ist, was insbesondere aus Fig. 2 deutlich wird.

Die besonders effiziente Aufbereitung von mittels dem Injektor 3 dem Abgas zugeführter Harnstofflösung wird nun durch die nachfolgend unter weiterem Bezug auf Fig. 1 und Fig. 2 näher erläuterten und in synergistischer Weise zusammenwirkenden Maßnahmen erreicht.

Zunächst wird für in das Abgaszufuhrrohr 24 einströmendes Abgas eine weitgehende Gleichverteilung über den Rohrquerschnitt durch ein Blendenbauteil 27 mit großer Blendenlochöffnung erreicht. Die Blendenöffnung beträgt bevorzugt mehr als 90 %, besonders bevorzugt mehr als 95 % des Rohrquerschnitts. Dadurch wird der Druckverlust gering gehalten und dennoch durch Verwirbelungen an der Blendenkante ein gute Abgasgleichverteilung erreicht.

Weiterhin wird durch ein sich in Längsrichtung des Abgaszufuhrrohres 24 erstreckendes Abgasleitelement 17 eine Aufteilung des Abgasstroms dadurch erreicht, dass ein Teil des Abgasstroms auf die perforierte Mantelfläche des Trichterelements 10 und der andere Teil des Abgasstroms in Richtung auf den diesbezüglich stromabwärtig angeordneten Teil der großflächigen Perforation 11 des Mischrohrs 7 gelenkt wird. Hierzu reicht das Abgasleitelement 17 von einer bezüglich der ersten Trennstelle 23 des Abgasleitungselements 18 stromaufwärtigen Stelle bis nahe an das Mischrohr 7 heran und erstreckt sich vorzugsweise wenigstens annähernd über die gesamte radiale Ausdehnung des ersten Schenkels 21 des Abgasleitungselements 18 bzw. des Abgaszufuhrrohrs 24 und umschließt endseitig das Mischrohr 7 mit geringem Abstand etwa halbkreisförmig.

In Richtung auf die perforierte Mantelfläche des Trichterelements 10 gelenktes Abgas strömt durch die dort vorhandene großflächige Perforation 11 des Mischrohrs 7 großteils ins Innere des durch das Trichterelement 10 gebildeten stromaufwärtigen Teils des Mischrohrs 7 und trifft dort auf die perforierte Mantelfläche des Trichterelements 10. Um eine ringsum möglichst gleichverteilte Anströmung zu ermöglichen, ist für das Abgasleitungselement 18 im Übergang vom ersten Schenkel 21 zum zweiten Schenkel 22 eine erste taschenförmige Ausbuchtung 19 vorgesehen. Durch diese Ausbuchtung 19 wird der radiale Abstand zwischen Mischrohr 7 und dem Abgasleitungselement 18 im Anordnungsbereich des Trichterelements 10 vergrößert und eine Vergleichmäßigung der Einströmverhältnisse ringsum erzielt. Eine Durchmessererweiterung infolge der ersten taschenförmigen Ausbuchtung 19 beträgt vorzugsweise etwa 10 %.

Eine Aufteilung von in das Trichterelement 10 und in den diesbezüglich stromabwärtigen Teil des Mischrohrs 7 jeweils einströmendem Abgas in Bezug auf Menge und Strömungsgeschwindigkeit wird maßgeblich durch die Perforation 11, 12 des Mischrohrs 7 bzw. des Trichterelements 10 bestimmt. Vorzugsweise ist die Perforation 11 des Mischrohrs 7 großflächig und zumindest überwiegend gleichmäßig und in Form von sich in Umfangsrichtung erstreckenden Langlöchern ausgeführt. Der offene Anteil der Mischrohrmantelfläche beträgt dabei bevorzugt mehr als 70 %, besonders bevorzugt mehr als 80 %. Dadurch sind einerseits eine wirbelarme Abgaseinströmung ins Mischrohrinnere und ein Transport von dort vorhandenem Harnstoff in axialer Richtung ermöglicht. Besonders bevorzugt ist es, wenn direkt anschließend an den Anlagebereich des Trichterelements 10 am Mischrohr 7 ringsum etwas kleinere Perforationslöcher vorgesehen sind. Dies trägt zu einer Lagestabilisierung des Sprühstrahlkegels im zentralen Bereich des Mischrohrs 7 bei. Andererseits wird durch einen das Mischrohr 7 umströmenden Abgasanteil die Harnstofflösung von der Wand des Abgasleitungselements 18, insbesondere seines zweiten Schenkels 22, durch Ausbildung eines Abgaspolsters ferngehalten. Das Mischrohr 7 kann so eine Führungs- und Leitfunktion für mit Harnstofflösung angereichertes Abgas übernehmen. Hierfür beträgt der Durchmesser des Mischrohrs 7 etwa zwei Drittel des Durchmessers des zweiten Schenkels 22 des Abgasleitungselements 18.

Zur Strömungsvergleichmäßigung, insbesondere zur Ermöglichung einer ringsum möglichst gleichförmigen in den hinter dem Trichterelement 10 liegenden Mischrohrbereich erfolgenden Abgaseinströmung, ist im Anschluss an die erste taschenförmige Ausbuchtung 19 eine annähernd umlaufende zweite taschenförmige Ausbuchtung 20 des zweiten Schenkels des Abgasleitungselements 18 vorgesehen. Diese bewirkt auch eine Verminderung von Druckverlusten. Insbesondere kann eine Verminderung eines Staudrucks am Knickpunkt des Abgasleitungselements 18 infolge der im Abgasleitungselement 18 erfolgenden Umlenkung der Hauptabgasströmungsrichtung 16 erreicht werden. Eine Durchmessererweiterung infolge der zweiten taschenförmigen Ausbuchtung 20 beträgt vorzugsweise ebenfalls etwa 10 %.

Aufgrund der im Vergleich zum Mischrohr 7 deutlich kleinflächigeren Perforation 12 des Trichterelements 10 tritt Abgas ins Innere des Trichterelements 10 mit vergleichsweise großer Geschwindigkeit ein. Dadurch wird eine Aufsplitterung des vom Injektor 3 durch die Durchtrittsöffnung 13 ins Innere des Trichterelements 10 gesprühten Reduktionsmittelsprühstrahls 6 und damit eine Feinverteilung erreicht. Ferner ist eine Ausbildung einer sich innen an der Mantelfläche des Trichterelements 10 anlegenden Druckpolsters ermöglicht, wodurch deren Benetzung wirksam vermieden werden kann. Bevorzugt beträgt hierfür der offene Anteil der Mantelfläche des Trichterelements 10 weniger als 30 %, besonders bevorzugt weniger als 20 %. In einer besonders bevorzugten Ausführungsform ist die Perforation 12 des Trichterelements 10 annähernd gleichmäßig durch etwa kreisrunde Löcher mit einem Durchmesser zwischen 2 mm und 6 mm, vorzugsweise zwischen 3 mm und 5 mm gebildet.

Durch die Perforationslöcher 12 des Mischrohrs 10 ins Innere des Trichterelements 10 eintretendes Abgas trifft vorzugsweise etwa senkrecht auf den sich im Inneren des Trichterelements 10 ausbildenden Reduktionsmittel-Sprühstrahlkegel 6. Damit der Injektor 3 Harnstofflösung ins Innere des Trichterelements 10 absprühen kann, ist am verjüngten Ende des Trichterelements 10 eine Durchtrittsöffnung 13 angeordnet, die der Injektorspitze 4 mit geringem Abstand zentral gegenüberliegt. Der Abstand der Injektorspitze 4 von der Ebene der Durchtrittsöffnung 13 beträgt vorzugsweise etwa die Hälfte bis ein Drittel des Injektordurchmessers. Die Durchtrittsöffnung 13 ist bevorzugt kreisrund mit einem Durchmesser ausgebildet, der etwa dem Injektordurchmesser entspricht und beträgt etwa 15 mm. Das verjüngte Ende des Trichterelements 10 ist dabei etwa im Bereich des ersten Mischrohrendes 8 angeordnet, an welchem das Mischrohr 7 mit dem Flanschbauteil 29 ringsum verbunden ist. Der Injektor 3 durchdringt dabei das Flanschbauteil 29, wobei die Injektorspitze 4 etwa bündig mit dem Flanschbauteil 29 abschließt.

Der vom Injektor 3 abgegebene Sprühstrahl 6 kann somit direkt ins Innere des Trichterelements 10 eintreten. Bevorzugt gibt der Injektor 3 den Sprühstrahl 6 mit einem Abgabedruck von etwa 5 bar bis 12 bar, besonders bevorzugt mit einem Abgabedruck von etwa 10 bar derart ab, dass sich wenigstens annähernd ein Vollkegel mit einem Öffnungswinkel α ausbildet, der etwa dem Öffnungswinkel des Trichterelements 10 entspricht. Die Austrittsgeschwindigkeit der Harnstofflösung beträgt dabei etwa 15 m/s, wodurch größere Reduktionsmitteltröpfchen vergleichsweise weit ins Innere des Trichterelements 10 oder darüber hinaus getragen werden, wobei sie in kleinere Tröpfchen zerfallen können, wodurch insgesamt ein feines Spray ausgebildet wird.

Die Injektorspitze 4 und der die Durchtrittsöffnung 13 umgebende Bereich der Mantelfläche des Trichterelements 10 bilden einen Ringspalt 15 aus, durch den Abgas nach etwa 90 Grad Umlenkung in etwa axialer Richtung in das Trichterelement 10 eintreten kann. Der Ringspalt 15 ist durch Anordnung von Injektorspitze 4 und Trichterelement 10 sowie durch Größe von Durchtrittsöffnung 13 und Injektorspitze 4 so dimensioniert, dass sich zumindest oberhalb eines Teillastbetriebs des Dieselmotors eine Einströmgeschwindigkeit von über den Ringspalt 15 in das Trichterelement 10 einströmendem Abgas ergibt, welche größer ist als die Austrittsgeschwindigkeit der Harnstofflösung aus dem Injektor 3. Bevorzugt wird eine Abgaseinströmgeschwindigkeit von mehr 15 m/s in Lastbereichen mit mehr als 20 % Nennlast des Dieselmotors erreicht. Vorzugsweise ist im überwiegenden Lastbereich des Dieselmotors zumindest im Innenbereich des Trichterelements 10 eine Abgasgeschwindigkeit vorhanden, welche die anfängliche Geschwindigkeit des Reduktionsmittel-Sprühstrahls 6 übertrifft. Dies fördert eine Aufsplitterung größerer Reduktionsmitteltröpfchen und die Ausbildung eines möglichst feinen Sprays. Ein genereller weiterer Vorteil des über den Ringspalt 15 in das Trichterelement 10 eintretenden Abgases besteht in seiner Wirkung in Bezug auf den Transport des Reduktionsmittelsprühstrahls in axialer Richtung. Ferner werden infolge der im Wesentlichen axialen Abgasströmung, welche den Reduktionsmittel-Sprühstrahl bereits in einem frühen Stadium der Entstehung erfasst, Rezirkulationen des Reduktionsmittels und strömungsmäßige Totzonen insbesondere im verjüngten Bereich des Trichterelements 10 vermieden. Um die Einströmbedingungen von Abgas über den Ringspalt 15 ins Innere des Trichterelements 10 zu verbessern, ist vorzugsweise eine Anfasung der Injektorspitze 4 vorgesehen.

Infolge der beschriebenen Maßnahmen sind eine besonders wirksame und wenigstens annähernd ablagerungsfreie Aufbereitung und eine rasche Verdampfung auf kurzen Laufstrecken von mittels dem Injektor 3 dem Abgas zugegebener Harnstofflösung ermöglicht. Um insbesondere durch erhöhte Temperaturen begünstigte, jedoch unerwünschte Ablagerungen an der Injektorspitze 4 so weit als möglich zu vermeiden, sind nachfolgend näher erläuterte Maßnahmen für eine effektive Wärmeabfuhr aus dem dem heißem Abgas ausgesetzten Flanschbauteil 29 vorgesehen. Hierzu wird Bezug auf die Figuren 2 und 3 genommen, wobei in Fig. 3 speziell eine Kühlblechanordnung zur Kühlung und Befestigung der Dosiereinheit 2 dargestellt ist.

Die in Fig. 3 dargestellte Kühlblechanordnung umfasst vorliegend ein erstes Kühlblech 30 und ein zweites Kühlblech 31, die unter Zwischenschaltung eines Wärmeübertragungsblechs 32 plan aufeinander liegend montiert sind. Dabei ist die Dosiereinheit 2 mittels vorliegend als mit dem ersten Kühleblech fest verbundenen Stehbolzen ausgeführten Schraubverbindungen 34 am ersten Kühlblech 30 direkt befestigt. Das erste Kühlblech 30 stellt somit nicht nur eine Kühlfläche zur Verfügung, sondern besitzt außerdem eine Tragfunktion. Die Kühlblechanordnung, d.h. das erste und das zweite Kühlblech 30, 31 sowie das Wärmeübertragungsblech 32 sind über Schrauben 35 fest am Flanschbauteil 29 befestigt. Zur Befestigung werden die Schrauben 35 durch entsprechende Durchgangsöffnungen 36 im ersten und im zweiten Kühlblech 30, 31 sowie im Wärmeübertragungsblech 32 hindurch gesteckt und in das Flanschbauteil 29 eingeschraubt. Damit erfolgt eine Wärmeübertragung von dem dem heißen Abgas ausgesetzten Flanschbauteil 29 in erster Linie über die Schrauben 35 auf die Kühlblechanordnung. Eine besonders effektive Kühlung mit Vermeidung einer Überhitzung der Dosiereinheit 2 wird nun dadurch erreicht, dass mittels des Wärmeübertragungsblechs 32 einerseits die vom Flanschbauteil 29 übertragene Wärme auf das erste Kühlblech 30 und zusätzlich auf das zweite Kühlblech 31 verteilt wird, wodurch die Kühlwirkung im Vergleich zu einem einzelnen Kühlblech annähernd verdoppelt wird. Dabei bewirkt das Wärmeübertragungsblech 32 eine Abstandshaltung zwischen den beiden Kühlblechen 30 und 31, wodurch die konvektive Wärmeabfuhr an die Umgebung verbessert ist. Zusätzlich erfolgt durch die spezielle lappenförmige Ausbildung der Gestalt des Wärmeübertragungsblechs 32 eine gezielte Wärmeabfuhr in unkritische Bereiche der Kühlbleche 30, 31. Infolge der durch diese Ausbildung der Kühlblechanordnung ermöglichten effektiven Wärmeabfuhr kann die Temperatur sowohl der Dosiereinheit 2 als auch des Injektors vergleichsweise niedrig gehalten werden.

Es wird noch darauf hingewiesen, dass durch eine in Fig. 1 lediglich teilweise sichtbare bzw. gezeigte Rahmenhalterung 37 eine Befestigung des Reduktionsmittezugabe- und Aufbereitungssystems 1 an unterschiedliche Abgassysteme ermöglicht ist. Dabei ermöglicht die Rahmenhalterung 37 zusätzlich eine mechanische Fixierung der an den Trennstellen 23, 25 aneinander gefügten Abgasleitungs- bzw. Rohrelemente 18, 24, 26.

### Bezugszeichenliste

- 1: Reduktionsmittelzugabe- und Aufbereitungssystem
- 2: Reduktionsmittel-Dosiereinheit
- 3: Injektor
- 4: Injektorspitze
- 5: Austrittsöffnung Injektor
- 6: Reduktionsmittelsprühstrahl
- 7: Mischrohr
- 8: erstes Mischrohrende
- 9: zweites Mischrohrende
- 10: Trichterelement
- 11: Mischrohr-Perforation
- 12: Trichterelement-Perforation
- 13: Durchtrittsöffnung Trichterelement
- 14: Rotationsachse
- 15: Ringspalt
- 16: Pfeil Abgasströmung
- α: Aufweitungswinkel Sprühstrahl
- 17: Abgasleitelement
- 18: Abgasleitungselement
- 19: erste taschenförmige Ausbuchtung
- 20: zweite taschenförmige Ausbuchtung
- 21: erster Schenkel Abgasleitungselement
- 22: zweiter Schenkel Abgasleitungselement
- 23: erste Trennstelle
- 24: Abgaszufuhrrohr
- 25: zweite Trennstelle
- 26: Abgasabfuhrrohr
- 27: Blendenbauteil
- 28: Wärmeisolationsummantelung
- 29: Flanschbauteil
- 30: erstes Kühlblech
- 31: zweites Kühlblech
- 32: Wärmeübertragungsblech
- 34: Schraubverbindung für Dosiereinheit
- 35: Schrauben
- 36: Durchgangsöffnungen
- 37: Rahmenhalterung

## Patentansprüche

1. Reduktionsmittelzugabe- und Aufbereitungssystem (1) für ein Kraftfahrzeug, zur Zugabe eines flüssigen Reduktionsmittels in von einer Brennkraftmaschine des Kraftfahrzeugs abgegebenes Abgas und zur Aufbereitung des zugegebenen Reduktionsmittels im Abgas, umfassend
- Einen einer Reduktionsmittel-Dosiereinheit (2) zugeordneten Injektor (3), der einen Reduktionsmittelsprühstrahl (6) in das Abgas sprühen kann,
- ein in einem Abgastrakt der Brennkraftmaschine angeordnetes Mischrohr (7) mit einem ersten und einem zweiten axialen Mischrohrende (8, 9), **gekennzeichnet durch** weiterhin umfassend
- ein im Bereich des ersten Mischrohrende (8) an oder in dem Mischrohr (7) angeordnetes, sich in Richtung vom ersten Mischrohrende (8) zum zweiten Mischrohrende (9) mit einem vorgegebenen Aufweitungswinkel kegelförmig aufweitendes Trichterelement (10),
wobei
- das Mischrohr (7) und das Trichterelement (10) als Rotations-Hohlkörper mit einer jeweils perforierten Mantelfläche ausgebildet sind und die Perforation (11) des Mischrohrs (7) zumindest überwiegend großflächiger als die Perforation (12) des Trichterelements (10) ausgeführt ist,
- das Trichterelement (10) an seinem dem ersten Mischrohrende (8) zugeordneten Ende eine Durchtrittsöffnung (13) aufweist,
- die Reduktionsmittel-Dosiereinheit (2) so angeordnet ist, dass der Injektor (3) den Reduktionsmittel-Sprühstrahl (6) durch die Durchtrittsöffnung (13) ins Innere des Trichterelements (10) sprühen kann, und
- der Injektor (3) eine endseitige Injektorspitze (4) aufweist, wobei die Injektorspitze (4) und die Durchtrittsöffnung (13) des Trichterelements (10) jeweils eine wenigstens annähernd kreisförmige Umfangskontur aufweisen und an der Injektorspitze (4) wenigstens annähernd mittig eine Austrittsöffnung (5) für das Reduktionsmittel angeordnet ist und die Austrittsöffnung (5) und ein Mittelpunkt der Durchtrittsöffnung (13) wenigstens annähernd auf der Rotationsachse (14) des Trichterelements (10) liegen und die Injektorspitze (4) mit geringem Abstand zur Durchtrittsöffnung (13) dem Trichterelement (10) derart gegenüber liegend angeordnet ist, dass durch die Injektorspitze (4) und einem die Durchtrittsöffnung (13) umgebenden Mantelflächenbereich des Trichterelements (10) ein Ringspalt (15) ausgebildet ist, durch welches Abgas ins Innere des Trichterelements (10) einströmen kann.

2. Reduktionsmittelzugabe- und Aufbereitungssystem nach Anspruch 1,
**dadurch gekennzeichnet,**
**dass** die Rotationsachsen (14) von Mischrohr (7) und Trichterelement (10) wenigstens annähernd aufeinander fallen und die Durchtrittsöffnung (13) wenigstens annähernd rotationsachsenzentral angeordnet ist.

3. Reduktionsmittelzugabe- und Aufbereitungssystem nach Anspruch 1 oder 2,
**dadurch gekennzeichnet,**
**dass** der Ringspalt (15) so dimensioniert ist, dass das durch den Ringspalt (15) in das Trichterelement (10) einströmende Abgas zumindest in oberhalb einer Teillast liegenden Betriebspunkten der Brennkraftmaschine eine Eintrittsgeschwindigkeit aufweist, welche oberhalb einer Geschwindigkeit liegt, mit welcher der Injektor (3) den Reduktionsmittelsprühstrahl (6) absprüht.

4. Reduktionsmittelzugabe- und Aufbereitungssystem nach einem der Ansprüche 1 bis 3,
**dadurch gekennzeichnet,**
**dass** der Injektor (3) einen sich wenigstens annähernd kegelförmig aufweitenden Reduktionsmittelsprühstrahl (6) in das Abgas sprühen kann, wobei ein Aufweitungswinkel (a) des Reduktionsmittelsprühstrahls (6) wenigstens annähernd dem Aufweitungswinkel des Trichterelements (10) entspricht.

5. Reduktionsmittelzugabe- und Aufbereitungssystem nach einem der Ansprüche 1 bis 4,
**dadurch gekennzeichnet,**
**dass** durch die Perforation (12) des Trichterelements (10) in das Trichterelement (10) einströmendes Abgas eine wenigstens annähernd senkrechte Orientierung in Bezug eine Hüllfläche des Reduktionsmittelsprühstrahlkegels des vom Injektor (3) abgesprühten Reduktionsmittelsprühstrahls (6) aufweist.

6. Reduktionsmittelzugabe- und Aufbereitungssystem nach einem der Ansprüche 1 bis 5,
**dadurch gekennzeichnet,**
**dass** das Trichterelement (10) zumindest großteils im Mischrohrinneren angeordnet ist, wobei das Trichterelement (10) an seinem aufgeweiteten Ende ringsum innen an der Mantelfläche des Mischrohrs (7) anliegt oder stoff- und/oder formschlüssig mit dem Mischrohr (7) verbunden ist.

7. Reduktionsmittelzugabe- und Aufbereitungssystem nach einem der Ansprüche 1 bis 6,
**dadurch gekennzeichnet,**
**dass** ein Abgasleitelement (17) vorgesehen ist, welches einen Teil von in Richtung des ersten Mischrohrendes (8) strömenden Abgases auf die perforierte Mantelfläche des Trichterelements (10) lenkt und einen zweiten Teil in Richtung auf einen in Bezug auf das Trichterelement (10) stromabwärtigen Teil der perforierten Mantelfläche des Mischrohres (7) lenkt.

8. Reduktionsmittelzugabe- und Aufbereitungssystem nach einem der Ansprüche 1 bis 7,
**dadurch gekennzeichnet,**
**dass** zur Abgasführung ein knieförmig abgebogenes Abgasleitungselement (18), mit einem einströmseitigen ersten Schenkel (21) und einem sich an den ersten Schenkel (21) anschließenden abströmseitigen zweiten Schenkel (22), vorgesehen ist, wobei sich das Mischrohr (7) von einem Umlenkungsbereich vom ersten Schenkel (21) zum zweiten Schenkel (22) in den zweiten Schenkel (22) hinein erstreckt und konzentrisch zum zweitenSchenkel (22) angeordnet ist.

9. Reduktionsmittelzugabe- und Aufbereitungssystem nach Anspruch 8,
**dadurch gekennzeichnet,**
**dass** an einem einströmseitigen Ende des ersten Schenkels (21) eine erste Trennstelle (23) zum Ansetzen eines Abgaszufuhrrohres (24) und am ausströmseitigen Ende des zweiten Schenkels (22) eine zweite Trennstelle (25) zum Anschluss eines Abgasabfuhrrohres (26) vorgesehen sind.

10. Reduktionsmittelzugabe- und Aufbereitungssystem nach Anspruch 9,
**dadurch gekennzeichnet,**
**dass** sich das Mischrohr (7) bis über die zweite Trennstelle (25) aus dem knieförmig gebogenen Abgasleitungselement (18) hinaus erstreckt.

11. Reduktionsmittelzugabe- und Aufbereitungssystem nach Anspruch 9 oder 10,
**dadurch gekennzeichnet,**
**dass** für das Abgaszufuhrrohr (24) ein Wirbel bildendes Blendenbauteil (27), vorgesehen ist.

12. Reduktionsmittelzugabe- und Aufbereitungssystem nach einem der Ansprüche bis 11,
**dadurch gekennzeichnet,**
**dass** das knieförmig abgebogene Abgasleitungselement (18) außenseitig wenigstens abschnittsweise eine Wärmeisolationsummantelung (28) aufweist.

13. Reduktionsmittelzugabe- und Aufbereitungssystem nach einem der Ansprüche 1 bis 12,
**dadurch gekennzeichnet,**
**dass** ein Flanschbauteil (29) vorgesehen ist, an dem das Mischrohr (7) und die Reduktionsmittel-Dosiereinheit (2) befestigt sind und an dem ferner außenseitig in Bezug auf den Abgastrakt wenigstens ein Kühlblech (30; 31) zur Wärmeabfuhr vom Flanschbauteil (29) an die Umgebung befestigt ist.

14. Reduktionsmittelzugabe- und Aufbereitungssystem nach Anspruch 13,
**dadurch gekennzeichnet,**
**dass** ein erstes und ein zweites Kühlblech (30, 31) vorgesehen sind, wobei das erste und das zweite Kühlblech (30, 31) über ein Wärmeübertragungsblech (32) in Wärmeübergangskontakt miteinander stehen und durch das Wärmeübertragungsblech (32) auf Abstand zueinander gehalten sind.

## Claims

1. Reducing agent adding and processing system (1) for a motor vehicle for adding a liquid reducing agent to exhaust gas emitted by an internal combustion engine of the motor vehicle and for processing the added reducing agent in the exhaust gas, comprising:
- an injector (3) assigned to a reducing agent metering unit (2), which injector (3) can spray a reducing agent spray jet (6) into the exhaust gas,
- a mixing pipe (7) arranged in an exhaust system of the internal combustion engine, having a first and a second axial mixing pipe end (8, 9),
**characterised by** further comprising:
- a funnel element (10) arranged in the region of the first mixing pipe end (8) on or in the mixing pipe (7), widening conically with a predefined widening angle in the direction from the first mixing pipe end (8) to the second mixing pipe end (9),
wherein
- the mixing pipe (7) and the funnel element (10) are formed as hollow rotation bodies with a respectively perforated shell surface and the perforation (11) of the mixing pipe (7) is configured to have an at least predominantly larger surface area than the perforation (12) of the funnel element (10),
- the funnel element (10) has a passage opening (13) at its end assigned to the first mixing pipe end (8),
- the reducing agent metering unit (2) is arranged so that the injector (3) can spray the reducing agent spray jet (6) through the passage opening (13) into the interior of the funnel element (10)., and
- the injector (3) has an end-face injector tip (4), wherein the injector tip (4) and the passage opening (13) of the funnel element (10) each have an at least approximately circular peripheral contour, and an outlet opening (5) for the reducing agent is arranged at least approximately centrally on the injector tip (4), and the outlet opening (5) and a mid-point of the passage opening (13) lie at least approximately on the rotation axis (14) of the funnel element (10), and the injector tip (4) is arranged at a short distance from the passage opening (13) lying opposite the funnel element (10) so that an annular gap (15) is formed by the injector tip (4) and a shell surface area of the funnel element (10) surrounding the passage opening (13), through which annular gap (15) exhaust gas can flow into the interior of the funnel element (10).

2. Reducing agent adding and processing system according to claim 1,
**characterised in that**
the rotation axes (14) of the mixing pipe (7) and funnel element (10) at least approximately coincide and the passage opening (13) is arranged at least approximately centrally in the rotation axis.

3. Reducing agent adding and processing system according to claim 1 or 2,
**characterised in that**
the annular gap (15) has such dimensions that the exhaust gas flowing through the annular gap (15) into the funnel element (10) has, at operating points of the internal combustion engine lying above a partial load, an inlet speed that lies above the speed, at which the injector (3) sprays the reducing agent spray jet (6).

4. Reducing agent adding and processing system according to one of claims 1 to 3,
**characterised in that**
the injector (3) can spray an at least approximately conically widening reducing agent spray jet (6) into the exhaust gas, wherein a widening angle (α) of the reducing agent spray jet (6) corresponds at least approximately to the widening angle of the funnel element (10).

5. Reducing agent adding and processing system according to one of claims 1 to 4,
**characterised in that**
exhaust gas flowing through the perforation (12) of the funnel element (10) into the funnel element (10) has an at least approximately vertical orientation with respect to an enveloping area of the reducing agent spray jet cone of the reducing agent spray jet (6) sprayed by the injector (3).

6. Reducing agent adding and processing system according to one of claims 1 to 5,
**characterised in that**
the funnel element (10) is arranged at least largely in the interior of the mixing pipe, wherein the funnel element (10) lies at its widened end around the inside of the shell surface of the mixing pipe (7) or is connected in a material-locking and / or shape-locking way to the mixing pipe (7).

7. Reducing agent adding and processing system according to one of claims 1 to 6,
**characterised in that**
an exhaust gas conveying element (17) is provided which directs a part of exhaust gas flowing in the direction of the first mixing pipe end (8) onto the perforated shell surface of the funnel element (10) and directs a second part in the direction of a part, downstream with respect to the funnel element (10), of the perforated shell surface of the mixing pipe (7).

8. Reducing agent adding and processing system according to one of claims 1 to 7,
**characterised in that**
an exhaust gas conveying element (18) bent in a knee form, having an inflow-side first leg (21) and an outflow-side second leg (22) connecting to the first leg (22), is provided to guide the exhaust gas, wherein the mixing pipe (7) extends from a deflection region from the first leg (21) to the second leg (22) into the second leg (22) and is arranged concentrically with respect to the second leg (22).

9. Reducing agent adding and processing system according to claim 8,
**characterised in that**
a first separation point (23) for applying an exhaust gas feed pipe (24) is provided at an inflow-side end of the first leg (21) and a second separation point (25) for connecting an exhaust gas removal pipe (26) is provided at the outflow-side end of the second leg (22).

10. Reducing agent adding and processing system according to claim 9,
**characterised in that**
the mixing pipe (7) extends beyond the second separation point (25) out of the exhaust gas conveying element (18) bent in a knee form.

11. Reducing agent adding and processing system according to claim 9 or 10,
**characterised in that**
a vane component (27) forming a swirl is provided for the exhaust gas feed pipe (24).

12. Reducing agent adding and processing system according to one of claims to 11,
**characterised in that**
the exhaust gas conveying element (18) bent in a knee form has on the outer side, at least in sections, a heat insulation jacket (28).

13. Reducing agent adding and processing system according to one of claims 1 to 12,
**characterised in that**
a flange component (20) is provided, to which the mixing pipe (7) and the reducing agent metering unit (2) are fastened, and to which further on the outer side with respect to the exhaust system at least one cooling plate (30, 31) for heat removal from the flange component (29) to the environment is fastened.

14. Reducing agent adding and processing system according to claim 13,
**characterised in that**
a first and a second cooling plate (30, 31) are provided, wherein the first and the second cooling plate (30, 31) are in heat transfer contact with each other via a heat transfer plate (32) and are held at a distance from each other by the heat transfer plate (32).

## Revendications

1. Système (1) d'addition et de préparation d'agent de réduction pour un véhicule automobile, destiné à ajouter un agent de réduction liquide dans un gaz d'échappement délivré par un moteur à combustion interne du véhicule automobile et destiné à préparer l'agent de réduction ajouté dans le gaz d'échappement, comprenant
- un injecteur (3) associé à une unité (2) de dosage d'agent de réduction qui peut injecter le jet (6) d'agent de réduction dans le gaz d'échappement,
- un tuyau (7) de mélange disposé dans une conduite d'échappement du moteur à combustion interne doté d'une première et d'une seconde extrémité axiale (8, 9) de tuyau de mélange, **caractérisé en ce qu'**il comprend en outre
- un élément (10) de trémie s'élargissant coniquement dans la zone de la première extrémité (8) du tuyau de mélange ou disposé sur ou dans le tuyau (7) de mélange, selon un angle d'élargissement prédéfini dans la direction de la première extrémité (8) de tuyau de mélange vers la seconde extrémité (9) de tuyau de mélange,
- le tuyau (7) de mélange et l'élément (10) de trémie étant conçus en tant que corps creux de rotation présentant chacun une surface d'enveloppe perforée et la perforation (11) du tuyau (7) de mélange étant au moins essentiellement supérieure à la perforation (12) de l'élément (10) de trémie,
- l'élément (10) de trémie présentant une ouverture (13) de passage associée à la première extrémité (8) de tuyau de mélange,
- l'unité (2) de dosage d'agent de réduction étant disposée de sorte que l'injecteur (3) puisse injecter le jet (6) d'agent de réduction à travers l'ouverture (13) de passage à l'intérieur de l'élément (10) de trémie, et
- l'injecteur (3) présente un embout (4) d'injecteur à une extrémité, l'embout (4) d'injecteur et l'ouverture (13) de passage de l'élément (10) de trémie présentent respectivement un contour périphérique au moins approximativement circulaire et sur l'embout (4) d'injecteur une ouverture (5) de sortie disposée au moins approximativement au centre pour l'agent de réduction et l'ouverture (5)de sortie et un point central de l'ouverture (13) de passage se trouvent au moins approximativement sur l'axe (14) de rotation de l'élément (10) de trémie et l'embout (4) d'injecteur fait face à une faible distance de l'ouverture (13) de passage à l'élément (10) de trémie de sorte qu'un espace annulaire (15) soit formée par l'embout (4) d'injecteur et une zone de surface d'enveloppe entourant l'ouverture (13) de passage de l'élément (10) de trémie, le gaz d'échappement pouvant s'écouler à travers ledit espace annulaire dans l'élément (10) de trémie.

2. Système d'addition et de préparation d'agent de réduction selon la revendication 1, **caractérisé en ce que** les axes (14) de rotation du tuyau (7) de mélange et de l'élément (10) de trémie se projettent approximativement l'un sur l'autre et l'ouverture (13) de passage est disposée au moins approximativement au centre des axes de rotation.

3. Système d'addition et de préparation d'agent de réduction selon la revendication 1 ou 2, **caractérisé en ce que** l'espace annulaire (15) est dimensionné de telle sorte que le gaz d'échappement s'écoulant par l'espace annulaire (15) dans l'élément (10) de trémie présente une vitesse d'entrée au moins à des points de fonctionnement se trouvant au moins dans la partie supérieure d'une charge partielle du moteur à combustion interne, ladite vitesse d'entrée étant supérieure à une vitesse à laquelle l'injecteur (3) injecte le jet (6) d'agent de réduction.

4. Système d'addition et de préparation d'agent de réduction selon la revendication 1 à 3, **caractérisé en ce que** l'injecteur (3) peut injecter un jet (6) d'agent de réduction s'élargissant approximativement coniquement dans le gaz d'échappement, un angle d'élargissement (<x) du jet (6) d'agent de réduction correspondant au moins approximativement à l'angle d'élargissement de l'élément (10) de trémie.

5. Système d'addition et de préparation d'agent de réduction selon l'une quelconque des revendications 1 à 4, **caractérisé en ce que** le gaz d'échappement s'écoulant à travers la performation (12) de l'élément (10) de trémie dans l'élément (10) de trémie présente une orientation au moins approximativement perpendiculaire par rapport à une surface d'enveloppe du cône de jet injecté d'agent de réduction par l'injecteur (3).

6. Système d'addition et de préparation d'agent de réduction selon l'une quelconque des revendications 1 à 5, **caractérisé en ce que** l'élément (10) de trémie au moins en grande partie est disposé à l'intérieur du tuyau de mélange, l'élément (10) de trémie se trouvant tout autour de son extrémité élargie sur la surface d'enveloppe du tuyau (7) de mélange ou est relié par complémentarité de forme et/ou de matière au tuyau (7) de mélange.

7. Système d'addition et de préparation d'agent de réduction selon l'une quelconque des revendications 1 à 6, **caractérisé en ce que** l'élément (17) collecteur de gaz d'échappement dirige une partie du gaz d'échappement s'écoulant dans la direction de la première extrémité (8) de tuyau de mélange sur la surface d'enveloppe perforée de l'élément (10) de trémie et dirige une seconde partie dans la direction d'une partie en aval par rapport à l'élément (10) de trémie de la surface d'enveloppe perforée du tuyau de mélange (7).

8. Système d'addition et de préparation d'agent de mélange selon l'une quelconque des revendications 1 à 7, **caractérisé en ce que** pour l'écoulement du gaz d'échappement est prévu un élément (18) de conduit d'échappement de gaz d'échappement coudé, doté d'une première branche (21) côté admission et d'une seconde branche (22) côté échappement adjacente à la première branche (21), le tuyau (7) de mélange s'étendant à l'intérieur de la seconde branche (22) à partir d'une zone de déviation de la première branche (21) à la seconde branche (22) et étant disposé concentriquement vers la seconde branche (22).

9. Système d'addition et de préparation d'agent de mélange selon la revendication 8, **caractérisé en ce que** sur une extrémité côté admission de la première branche (21) sont disposées un premier point de coupure (23) destiné à fixer un tuyau (24) d'admission de gaz d'échappement et sur une extrémité côté évacuation de la seconde branche (22) un second point de coupure (25) destiné à raccorder un tuyau d'évacuation de gaz d'échappement (26).

10. Système d'addition et de préparation d'agent de réduction selon la revendication 9, **caractérisé en ce que** le tuyau (7) de mélange s'étend jusqu'au second point de coupure (25) à partir de l'élément de conduit de gaz d'échappement coudé.

11. Système d'addition et de préparation d'agent de réduction selon la revendication 9 ou 10, **caractérisé en ce que** pour un tuyau (24) d'amenée de gaz d'admission est prévue un composant (27) de diaphragme.

12. Système d'addition et de préparation d'agent de mélange selon l'une quelconque des revendications à 11, **caractérisé en ce que** l'élément (18) de conduit de gaz d'échappement coudé présente côté extérieur au moins par segments une enveloppe (28) d'isolation thermique.

13. Système d'addition et de préparation d'agent de mélange selon l'une quelconque des revendications 1 à 12, **caractérisé en ce qu'**il est prévu un composant (29) de bride sur lequel sont fixés le tuyau (7) de mélange et l'unité (2) de dosage d'agent de réduction et sur lequel est fixée davantage à l'extérieur par rapport à la conduite de gaz d'échappement au moins une tôle (30, 31) de refroidissement destinée à l'évacuation de la chaleur provenant du composant (29) de diaphragme dans l'atmosphère.

14. Système d'addition et de préparation d'agent de réduction selon la revendication 13, **caractérisé en ce qu'**une première et une seconde tôle (30, 31) de refroidissement son prévues, la première et la seconde tôle (30, 31) de refroidissement sont reliées par contact de transmission de chaleur par l'intermédiaire d'une tôle de transmission de chaleur (32) et sont écartées l'une de l'autre par l'intermédiaire de la tôle (32) de transmission de chaleur.
